# EUROPÄISCHE PATENTSCHRIFT

(11) **EP 2 951 434 B1**
(45) Veröffentlichungstag und Bekanntmachung des Hinweises auf die Patenterteilung: **17.04.2019**
(21) Anmeldenummer: 14711907.7
(22) Anmeldetag: 27.01.2014
(51) Int. Cl.: F16H 57/04, F03D 15/00, F03D 15/10, F16H 57/08, F16C 17/02, F16C 17/26

(54) **WINDKRAFTANLAGENGETRIEBE**
WIND TURBINE GEARBOX
TRANSMISSION D'ÉOLIENNE

(30) Priorität: 30.01.2013 AT 500662013
(43) Veröffentlichungstag der Anmeldung: 09.12.2015
(73) Patentinhaber: Miba Gleitlager Austria GmbH, 4663 Laakirchen (AT)
(72) Erfinder: HAGER, Gunther, 4563 Ottsdorf am Ziehberg (AT); HÖLZL, Johannes Sebastian, 4880 Berg im Attergau (AT); KARI, Alexander, 5330 Fuschl am See (AT)
(74) Vertreter: Burger, Hannes
(86) Internationale Anmeldenummer: PCT/AT2014/050029
(87) Internationale Veröffentlichungsnummer: WO 2014/117196

(56) Entgegenhaltungen:
- EP-A1- 2 221 510
- EP-A1- 2 383 480
- DE-U- 1 985 822
- FR-A- 1 110 347
- GB-A- 712 079
- JP-U- S4 896 382
- US-A- 3 822 607
- US-A- 4 271 928

## Beschreibung

Die Erfindung betrifft ein Windkraftanlagengetriebe mit zumindest einem Zahnrad, das auf einer Achse gelagert ist, wobei zwischen dem Zahnrad und der Achse eine Lagerstelle mit einem Gleitlager angeordnet ist, und wobei in der Achse eine Ausnehmung zur Zuführung eines Schmiermittels zu dem Gleitlager ausgebildet ist. Weiter betrifft die Erfindung ein Windkraftanlagengetriebe mit zumindest einem Zahnrad, das auf einer Achse gelagert ist, wobei zwischen dem Zahnrad und der Achse eine Lagerstelle mit Gleitlagern angeordnet ist, die in axialer Richtung unter Ausbildung eines Zwischenraums voneinander beabstandet sind, und wobei in der Achse eine Ausnehmung zur Zuführung eines Schmiermittels zu den Gleitlagern ausgebildet ist.

In Windkraftanlagen werden Getriebe dazu verwendet, um die relativ langsame Drehbewegung des Windkraftrotors in höhere Drehzahlen zu übersetzen, um damit einen Generator zur Stromerzeugung zu betreiben. Großteils werden in diesen Getrieben Wälzlager eingesetzt, da die Schmiermittelversorgung von Gleitlagern aufgrund der großen Abmessungen der Getriebe und der niedrigen Drehzahlen in diesem Bereich problematisch ist. Insbesondere in der Anlaufphase wird das Schmiermittel nur ungenügend zu den Lagerstellen befördert.

In der EP 2 284 420 B1 sind verschiedene Getriebearten bzw. Getriebeausbildungen in der Verwendung in Windkraftanlagen beschrieben. In den Absätzen [0002] bis [0013] dieser Druckschrift werden zudem auch die Anforderungen an und die damit verbunden Probleme der einzelnen Lagerungen für die Getriebewellen bzw. Achsen beschrieben. Es sei daher an dieser Stelle zur Vermeidung von Wiederholungen dazu auf diese Druckschrift verwiesen.

Im Stand der Technik sind jedoch bereits Gleitlagerlösungen für Getriebe von Windkraftanlagen beschrieben worden.

So ist z.B. aus der gattungsgemäßen EP 2 383 480 A1 ein Planetengetriebe für eine Windkraftanlage bekannt. Diese weist zumindest ein Sonnenrad, ein Hohlrad und einen Planetenträger, in dem mehrere Planetenräder gelagert sind, auf. Zur Lagerung der Planetenräder sind mehrere Radialgleitlager vorgesehen, die jeweils eine Hülse aus einem Gleitlagerwerkstoff umfassen, und die entweder als Innenring auf einer Planetenradachse befestigt oder als Außenring in einer Bohrung eines Planetenrades montiert ist, wobei ein zugehöriger Lageraußen- oder Lagerinnenring entweder durch die Bohrung des Planetenrades oder durch die Planetenradachse gebildet ist. Weiter sind mehrere Axialgleitlager zur Lagerung der Planetenräder vorgesehen, die jeweils ein erstes Lagerelement aus einem Gleitlagerwerkstoff umfassen, der an einer Kontaktfläche zwischen einer Planetenträgerwange und einer Stirnseite eines Planetenrades entweder auf die Planetenträgerwange oder auf die Stirnseite des Planetenrades aufgebracht ist, wobei ein zugehöriges zweites Lagerelement entweder durch die Stirnseite des Planeten oder durch die Planetenträgerwange gebildet ist.

Zur Schmierung der Gleitlager werden in dieser Druckschrift drei verschiedene Möglichkeiten beschrieben.
1. Druckschmierung für den belasteten Betrieb des Getriebes. Die Gleitlager werden über Drucköl von der Planetenradachse versorgt. Dabei erfolgt die Druckölzufuhr ca. 90 ° vor dem Maximum der Belastungszone des Lagers.
2. Tauchschmierung für den belastungsfreien Betrieb des Getriebes. Die Gleitlager werden über ein Ölreservoir in der Planetenradachse mit Öl versorgt. Das Ölreservoir wird durch das Eintauchen der Planetenradachse in den Ölsumpf mit Öl gefüllt und leitet dieses Öl an das Gleitlager weiter. Die Ölzufuhr erfolgt ca. 110 ° vor dem Maximum der Belastungszone des Lagers. Durch die hydraulische Verbindung der Druckschmierung und der Tauchschmierung wird ein Ablauf des Öls sichergestellt.
3. Ölspeicherung für den belastungsfreien Betrieb des Getriebes. Die Radialgleitlager sind mit Ölstaukanten an den Stirnseiten der Planetenräder ausgerüstet, so dass immer ein definierter Ölstand im Radialgleitlager verbleibt. Damit ist eine Schmierung der Radialgleitlager im belastungsfreien Zustand gewährleistet.

Zur Druckschmierung der Axial- und/oder Radialgleitlager kann ein Ölverteilerring vorgesehen sein, der eine Sonnenradachse radial umgibt und eine Verbindung zu einem Ölzuführungskanal in einem Getriebegehäuse aufweist, wobei zumindest ein Ölverteilungskanal im Planetenträger vorgesehen ist, der mit dem Ölverteilerring verbunden ist und an einer Schmierungsstelle für ein Planetenradlager endet. Dabei können in den Planetenradachsen jeweils zwei von einem zur Planetenradachse parallelen Ölverteilungskanalabschnitt ausgehende, sich radial erstreckende Bohrungen vorgesehen sein, und die Hülsen jeweils zwei Schmierstoffsammelvorrichtungen aufweisen, zwischen denen jeweils eine umlaufende Schmierstoffversorgungsnut ausgebildet ist.

Zur Tauchschmierung der Axial- und/oder Radialgleitlager kann jeweils eine Bohrung in den Planetenradachsen vorgesehen sein, die ein durch Eintauchen der jeweiligen Planetenradachse in einen Ölsumpf füllbares Ölreservoir bildet. Dabei kann in den Planetenradachsen jeweils eine vom Ölreservoir ausgehende, sich radial erstreckende Bohrung vorgesehen sein, die an der Hülse endet. Die Hülsen können zudem jeweils in einem Bereich, in dem die vom Ölreservoir ausgehende Bohrung endet, eine Schmierstoffsammelvorrichtung aufweisen, die durch eine Aussparung an der Hülse gebildet ist.

Aus der AT 509 624 B1 ist ein Planetengetriebe für eine Windkraftanlage mit mehreren Planetenrädern, die jeweils über ein Lagerelement auf einer Achse gelagert sind bekannt, wobei das Lagerelement ein Mehrschichtgleitlager ist. Insbesondere sind zwei voneinander beabstandete Lagerhülsen pro Planetenrad vorgesehen.

In der durch das Getrieberad geführten Achse können zur Zuführung und zur Abführung eines Schmiermittels für das Lagerelement zumindest ein Kanal und/oder zumindest eine Bohrung angeordnet sein. Durch die gezielte Ölführung mit Frischölzufuhr direkt in den Schmierspalt in den Bereich der Hauptlastzone und durch die gezielte Ableitung wird ein geringerer Temperaturanstieg während des Betriebes des Getriebes trotz hoher Belastung und Mischreibanteil vermieden. Durch die Optimierung des Schmieröldurchsatzes auf ein Minimum - das Lager ist ein hydrodynamisch betriebenes Gleitlager ohne hydrostatische Unterstützung - können Zuführdrücke und Zuführmengen an Schmieröl sowie die Verlustleistung an jene von Wälzlagerlösungen, die normalerweise hinsichtlich der Verlustleistung deutliche Vorteile gegenüber Gleitlagerlösungen bieten, angeglichen werden.

Der vorliegenden Erfindung liegt die Aufgabe zugrunde, die Schmiermittelversorgung einer Gleitlagerung für ein Windkraftanlagengetriebe zu verbessern.

Die Aufgabe wird bei dem eingangs genannten Windkraftanlagengetriebe dadurch gelöst, dass im Bereich einer Anlagefläche des Gleitlagers an dem Zahnrad eine Nut im Zahnrad ausgebildet ist und die Nut über zumindest eine Verbindungsleitung mit der Umgebungsatmosphäre verbunden ist. Weiter wird die Aufgabe bei dem eingangs genannten Windkraftanlagengetriebe dadurch gelöst, dass der Zwischenraum über zumindest eine Verbindungsleitung mit der Umgebungsatmosphäre verbunden ist.

Von Vorteil ist dabei, dass durch die Anbindung des der Nut bzw. Zwischenraums an die Umgebungsatmosphäre, d.h. den Umgebungsdruck, eine bessere Verteilung des zugeführten Schmiermittels in der bzw. den Lagerstelle(n) erreicht wird. Indem die Nut oder der Zwischenraum mit dem Umgebungsdruck in Verbindung steht wird die Drosselwirkung und der daraus resultierende geringere Öldurchfluss bei den sehr breiten Lagern - in axialer Richtung betrachtet - reduziert, wodurch der Volumenstrom an Schmiermittel durch die Lagerstelle erhöht werden kann. Im Vergleich zu der aus der AT 509 624 B1 bekannten Lösung der Gleitlagerschmierung in derartigen Getrieben wird der sich, dem Schmiermittel entgegenwirkende, aufbauende Gegendruck reduziert. Dieser Gegendruck kann bewirken, dass das Schmiermittel nur mehr über eine Stirnseite des (jeweiligen) Gleitlagers austreten kann. In der Folge kann die Lagerung aufgrund des reduzierten Volumenstroms an Schmiermittel überhitzen, wodurch letztendlich Lagerschäden verursacht werden können. Dies wird bei dem erfindungsgemäßen Windkraftanlagengetriebe wirkungsvoll verhindert. Durch die Reduzierung der Drosselwirkung ist es weiter möglich, dass in der Ausführungsvariante mit mehreren nebeneinander angeordneten Gleitlagern pro Lagerstelle lediglich eine Schmiermittelzuführung angeordnet wird, wodurch das Schmiermittelversorgungssystem weiter vereinfacht werden kann.

Nach einer Ausführungsvariante des Windkraftanlagengetriebes ist vorgesehen, dass zusätzlich die Verbindungsleitung der Nut oder des Zwischenraums zur Umgebungsatmosphäre im Zahnrad ausgebildet ist. Es wird damit erreicht, dass, nachdem die Verbindungsleitung mit dem Zahnrad rotiert, nur jeweils ein Bereich des Zwischenraums unmittelbar mit dieser Verbindungsleitung in Verbindung steht, und zwar zu dem Zeitpunkt, zu dem die Verbindungsleitung diesen Bereich überstreicht. Es ist damit eine bessere Abstimmung in Hinblick auf die Reduzierung der Drosselwirkung des Zwischenraums möglich, indem diese über die Größe der Öffnung der Verbindungsleitung - und gegebenenfalls die Anzahl der Verbindungsleitungen pro Zahnrad - möglich.

In der Ausführung der Erfindung ist vorgesehen, dass die Verbindungsleitung in der Achse ausgebildet ist, wobei gegebenenfalls in dem Zahnrad zusätzlich eine Verbindungsleitung vorgesehen werden kann. Durch die Einbettung der Verbindungsleitung in die Achse wird einerseits ein einfacherer, kompakterer Aufbau des Ölversorgungssystems für die Lagerstellen erreicht. Andererseits wird damit aber auch eine Schwächung des Zahnrades durch die Verbindungsleitung vermieden.

Dabei kann die Achse selbst Achse zumindest teilweise als Hohlachse ausgeführt sein, wodurch sich die Herstellung des Ölversorgungssystems für die Lagerstellen vereinfachen lässt.

Unter einer Hohlachse wird im Rahmen der Erfindung eine Achse verstanden, die entlang ihrer Längsmittelachse eine Bohrung aufweist. Mit "zumindest teilweise" ist dabei gemeint, dass die Bohrung als Sacklochbohrung ausgeführt sein kann.

Von Vorteil ist es auch, wenn im Bereich jedes Gleitlagers zumindest eine Ausnehmung zur Zuführung des Schmiermittels angeordnet ist. Es wird damit also eine Lagerstelle nicht über eine andere Lagerstelle mit dem Schmiermittel versorgt. Anders ausgedrückt wird damit die Lagerung des Zahnrades in zumindest zwei vom Gesichtspunkt des Schmiermittelflusses separat funktionierende Lagerstellen aufgespalten. Dies trifft auch bei der Ausführungsvariante mit nur einem Gleitlager zu, da in diesem Fall die beiden Lagerstellen als die beiden neben der Nut liegenden Bereiche des Gleitlagers angesehen werden können. Es ist damit eine bessere Schmiermittelversorgung der Lagerstellen erzielbar, wodurch die Kühlwirkung des Schmiermittels an sich verbessert werden kann, wobei die Anbindung der Nut oder des Zwischenraums an den Umgebungsdruck hinsichtlich des Volumenstroms an Schmiermittel verbessernd wirkt.

Von Vorteil ist weiter, wenn über die Verbindungsleitung in der Achse zumindest ein Teil des Schmiermittels aus dem Gleitlagerbereich abführbar ist, da damit der konstruktive Aufwand für die Schmiermittelabfuhr vereinfacht wird.

In der bevorzugten Ausführungsform des Windkraftanlagengetriebes kann vorgesehen sein, dass ein Verhältnis der Breite der Lagerstelle in axialer Richtung zum Durchmesser der Achse in radialer Richtung maximal 2 beträgt. Es wird damit erreicht, dass der Volumenstrom an Schmiermittel auf einen vordefinierbaren maximalen Wert beschränkt werden kann. Anders ausgedrückt kann damit ein zu hoher Volumenstrom an Schmiermittel durch die Lagerstellen vermieden werden.

Nach weiteren Ausführungsvarianten des Windkraftanlagengetriebes kann vorgesehen sein, dass eine Breite der Nut oder des Zwischenraums in axialer Richtung ausgewählt ist aus einem Bereich von 5 % bis 90 % der Breite eines Gleitlagers in axialer Richtung und/oder dass eine Höhe der Nut oder des Zwischenraums in radialer Richtung ausgewählt ist aus einem Bereich von 5 % bis 100 % der Wandstärke des Gleitlagers, wodurch die Kühlung der Lagerstellung durch das Schmiermittel einfach an die vorgegebenen Dimensionierungen des Windkraftanlagengetriebes angepasst werden kann.

Zum besseren Verständnis der Erfindung wird diese anhand der nachfolgenden Figur näher erläutert.

Es zeigt in schematisch vereinfachter Darstellung:
- Fig. 1: einen Querschnitt durch einen Ausschnitt aus einem Windkraftanlagengetriebe;
- Fig. 2: einen Querschnitt durch einen Ausschnitt einer Ausführungsvariante des Windkraftanlagengetriebes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

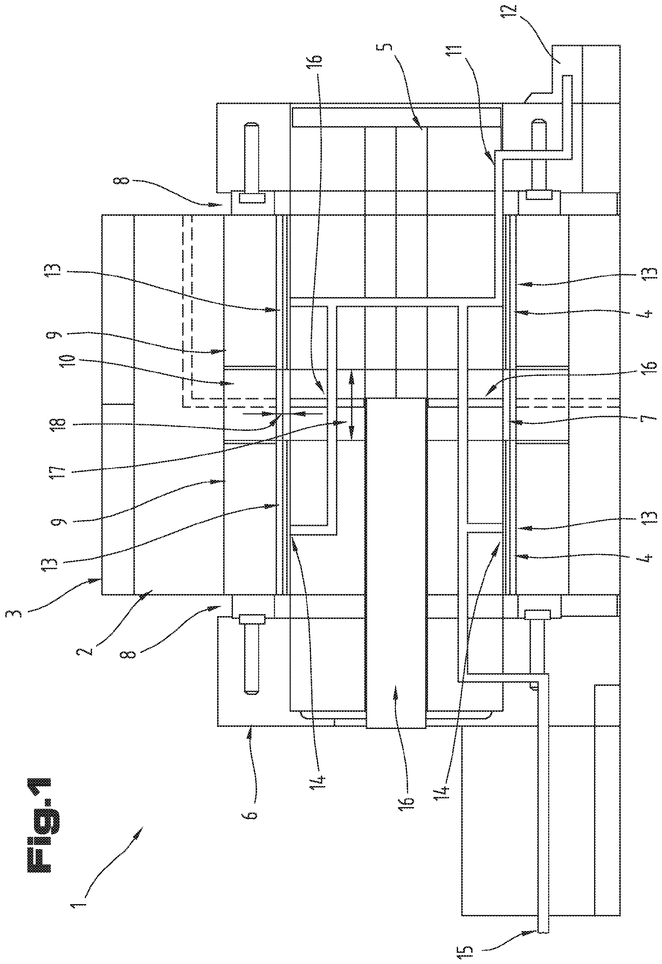

Fig. 1 zeigt einen Querschnitt durch einen Ausschnitt aus einem Windkraftanlagengetriebe 1. Das Windkraftanlagengetriebe 1 ist insbesondere in Form eines (einfachen) Planetengetriebes ausgebildet.

Bekanntlich umfassen Windkraftanlagen einen Turm an dessen oberen Ende eine Gondel angeordnet ist, in der der Rotor mit den Rotorblättern gelagert ist. Dieser Rotor ist über ein Getriebe mit einem Generator, der sich ebenfalls in der Gondel befindet, wirkungsverbunden, wobei über das Getriebe die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

Das Windkraftanlagengetriebe 1 weist zumindest ein Zahnrad 2 auf. Dieses Zahnrad 2 ist in dem Windkraftanlagengetriebe 1 in kämmenden Eingriff zwischen einem zweiten und einem dritten Zahnrad (beide nicht dargestellt) angeordnet. Dazu weist das zumindest ein Zahnrad 2 eine Außenstirnverzahnung 3 auf.

In der Ausführungsform des Windkraftanlagengetriebes 1 als Planetengetriebe, insbesondere als Hauptgetriebe einer Windraftanlage, ist das zweite Zahnrad als Sonnenrad mit einer Stirnverzahnung ausgeführt, das mit einer Welle, die zum Generatorrotor führt, drehfest verbunden ist. Das Sonnenrad ist üblicherweise von mehreren Zahnrädern 2, den Planetenrädern, beispielsweise zwei, vorzugsweise drei oder vier, umgeben.

Das dritte Zahnrad ist als Hohlrad ausgeführt, das das zumindest eine Zahnrad 2 bzw. die Zahnräder 2 in radialer Richtung umgibt und das an einer inneren Oberfläche ebenfalls zumindest teilweise eine Verzahnung aufweist, die in kämmenden Eingriff mit der Außenstirnverzahnung 3 des Zahnrades 2 bzw. der Zahnräder 2 steht. Das Hohlrad ist drehfest mit einer Rotorwelle des Rotors der Windkraftanlage oder drehfest mit dem Gehäuse des Windkraftanlagengetriebes 1 verbunden.

Die Verzahnungen der Zahnräder in dem Windkraftanlagengetriebe 1 können als Geradverzahnung oder Schrägverzahnung ausgeführt sein.

Das zumindest eine Zahnrad 2 (es wird im Folgenden nur mehr ein Zahnrad 2 beschrieben, wobei diese Ausführungen auch auf alle bzw. mehrere Zahnräder 2 übertragbar sind) ist über mehrere Gleitlager 4, insbesondere Mehrschichtgleitlager, auf einer Achse 5, also beispielsweise einem Planetenbolzen (der so genannten Planetenachse) gelagert. Diese Achse 5 kann entweder einstückig mit zumindest einem Teil eines Zahnradträgers 6, insbesondere einem Planetenträger, ausgebildet sein oder sie ist als gesonderter Bauteil in Bohrungen des Zahnradträgers 6 eingesetzt.

Es sei darauf hingewiesen, dass nicht nur einstufige Ausführungen von derartigen Windkraftanlagengetrieben 1 im Rahmen der Erfindung möglich sind, sondern auch mehrstufige, beispielsweise zwei- oder dreistufige, wozu in zumindest einem Zahnrad 2, insbesondere einem Planeten, weitere Stirnradstufen integriert sein können. Zudem sind auch Parallelgetriebe, wie sie beispielsweise in der eingangs genannten EP 2 284 420 B1 beschrieben sind, im Rahmen der Erfindung darstellbar. Es sei daher dazu auf diese Druckschrift verwiesen. Demgemäß kann das Windkraftanlagengetriebe 1 ein einfaches Planetengetriebe und ein paralleles zwei- oder mehrstufiges Planetengetriebe oder generell mehrere Planetengetriebe aufweisen.

Des Weiteren sei nochmals angemerkt, dass, obwohl bevorzugt, die Erfindung nicht nur in Planetengetrieben von Windkraftanlagen Anwendung findet, sondern generell in Getrieben für Windkraftanlagen verwendet werden kann, insbesondere zur Übersetzung der langsamen Drehzahl des Rotors einer Windkraftanlage in eine höhere Drehzahl.

Die Gleitlager 4 sind in axialer Richtung unter Ausbildung eines Zwischenraums 7 voneinander beabstandet angeordnet.

Die Gleitlager 4 können prinzipiell in Form von Gleitlagerhalbschalen ausgeführt sein. Bevorzugt sind diese jedoch als Lagerbuchsen ausgebildet. Die Lagerbuchsen eines Zahnrades 2 ist dabei mit diesem drehfest verbunden, beispielsweise über einen Presssitz oder über eine andere, geeignete Methode. Alternativ besteht die Möglichkeit, dass die Gleitlager 2 drehfest mit der Achse 5 verbunden sind.

Ein Mehrschichtgleitlager besteht zumindest aus einer Stützschicht und einer Gleitschicht, die auf der Stützschicht aufgebracht ist. Die Gleitschicht bildet dabei eine Lauffläche für die Achse 5 oder das Zahnrad 2, je nach voranstehend beschriebener Anordnung.

Die Mehrschichtigkeit des Gleitlagers 4 kann aber auch dadurch erreicht werden, dass die Achse 5 im Bereich der Lagerung des Zahnrades 2 und/oder das Zahnrades 2 selbst im Bereich der die Achse 5 aufnehmenden Bohrung mit einem Werkstoff für eine Gleitschicht beschichtet ist. In diesem Fall wird die Stützschicht des Mehrschichtgleitlagers durch das Material des Zahnrades 2, beispielsweise Stahl und/oder den Werkstoff der Achse 5, beispielsweise Stahl, gebildet.

Neben dieser zweischichtigen Ausführung des Mehrschichtgleitlagers besteht im Rahmen der Erfindung auch die Möglichkeit, dass Zwischenschichten zwischen der Gleitschicht und der Stützschicht angeordnet sind, beispielsweise eine Lagermetallschicht und/oder zumindest eine Bindeschicht und/oder eine Diffusionssperrschicht.

Beispiele für Werkstoffe für die einzelnen Schichten des Mehrschichtgleitlagers sind in der eingangs genannten AT 509 624 B1 beschrieben, auf die diesbezüglich Bezug genommen wird.

In axialem Verlauf jeweils neben jeweils einem Gleitlager 4 kann eine Anlaufscheibe 8 zwischen den Gleitlagern 4 bzw. dem Zahnrad 2 und dem Zahnradträger 6 vorgesehen sein.

Die Gleitschicht der Gleitlager 4 kann bis in die Stirnfläche zu den Anlaufscheiben 8 hochgezogen sein, sodass also die Gleitlager 4 neben der radialen Lagerfunktion auch eine axiale Lagerfunktion erfüllen.

Zudem kann das Zahnrad 2 jeweils an den Stirnseiten - in axialer Richtung betrachtet - umlaufende Ringnuten 9 aufweisen, in denen die Gleitlager 2 angeordnet sind. Ein dadurch gebildeter, in Richtung auf die Achse 5 weisender und zwischen den Gleitlagern 4 angeordneter Ringsteg 10 des Zahnrades 2 bildet die obere Begrenzung des Zwischenraums 7. Alternativ dazu kann zwischen den Gleitlagern 2 und oberhalb des Zwischenraums 7 ein Abstandselement angeordnet sein, das insbesondere mit dem Zahnrad 2 verbunden ist.

Aus Fig. 1 ist weiter die Schmiermittelversorgung der Laufflächen der Gleitlager 4 ersichtlich. Dazu wird über eine Bohrung 11 bzw. eine kanalförmige Ausnehmung in der Achse 5, von einem Schmiermitteleinlass 12, der mit einem nicht dargestellten Schmiermittelreservoir in Verbindung steht, Schmiermittel, insbesondere Schmieröl, in Bereiche 13 der Laufflächen der Gleitlager 4 zugeführt, von denen sich dann das Schmiermittel über zumindest annähernd die gesamte Lauffläche verteilt. Die Bohrung 11 bzw. die Ausnehmung weist mehrere Abschnitte auf, die insbesondere entweder einen radial nach außen weisenden oder einen axialen Verlauf aufweisen. Weiter kann ein Teil der Bohrung 11 bzw. der Ausnehmung auch durch den Zahnradträger 6 geführt sein, wie dies aus Fig. 1 ersichtlich ist.

Der genaue Verlauf der Abschnitte der Bohrung 11 bzw. der Ausnehmung richtet sich nach den mechanischen Erfordernissen des Windkraftanlagengetriebes 1 und/oder nach der Einfachheit der Herstellbarkeit.

Wie aus Fig. 1 ersichtlich weist die Bohrung 11 bzw. die Ausnehmung zumindest eine Abzweigung auf, um eine Verteilung des Schmiermittels zu sämtlichen Lagerstellen zu erreichen, sodass also jedes der beiden Gleitlager 4 - es sei erwähnt, dass auch mehr als zwei Gleitlager(buchsen) pro Zahnrad 2 angeordnet werden können - über zumindest eine eigene Schmiermittelzufuhr verfügt. Gegebenenfalls können über den Umfang der Gleitlager 4 verteilt mehrere Schmiermittelaustritte 14 zur Lagerstelle angeordnet sein, beispielsweise zwei oder drei oder vier, etc. Alternativ oder zusätzlich können mehrere Schmiermittelaustritte 14 auch in axialer Richtung hintereinander angeordnet sein.

Es ist weiter möglich, dass die Schmiermittelzufuhr von zwei Seiten - in axialer Richtung betrachtet - erfolgt, also ein weiterer Schmiermitteleinlass 15 im Zahnradträger 6 oder in der Achse 5 ausgebildet ist. Beispielsweise kann rotorseitig (in Fig. 1 links vom Zahnrad 2) und generatorseitig (in Fig. 1 rechts vom Zahnrad 2) zumindest ein Schmiermitteleinlass 15 angeordnet sein, wobei auf zumindest einer Seite (oder auf beiden Seiten) auch mehrere Schmiermitteleinlässe 15 angeordnet werden können.

Anders als bei der in der AT 509 624 B1 dargestellten Ausführung der Schmiermittelversorgung wird bei dem Windkraftanlagengetriebe 1 nach der Erfindung das Schmiermittel nicht in den durch die Gleitlager 4, die Achse 5 und das Zahnrad 2 begrenzten Zwischenraum 7 zugeführt sondern unterhalb der Gleitlager 2, wie dies aus Fig. 1 ersichtlich ist. Wie im Stand der Technik beschrieben enden also die Schmiermittelaustritte 14 bevorzugt direkt unterhalb der Laufflächen 16 der Gleitlager 4.

Die Achse 5 kann im Zuführbereich des Schmiermittels eine Ausnehmung, das heißt eine Absetzung im Bereich der Oberfläche, aufweisen, um damit die Schmiermittelverteilung zu unterstützen. Durch diese Absetzung wird ein größerer Querschnitt des Schmiermittelautritts 14 erreicht.

Es sei an dieser Stelle ausdrücklich erwähnt, dass die Schmiermittelzuführung auch ausschließlich über die Achse 5 erfolgen kann, also der Zahnradträger 6 keine Bohrung bzw. kanalförmige Ausnehmung hierfür aufweist.

Zur besseren Verteilung des Schmiermittels über zumindest annähernd die gesamten Laufflächen ist der Zwischenraum 7 über zumindest eine Verbindungsleitung 16 mit der Umgebungsatmosphäre verbunden. Die Verbindungsleitung 16 verläuft in der Achse 5, wozu unterhalb des Zwischenraums 7 zumindest ein radial verlaufender Abschnitt ausgebildet ist, der in einen axialen Abschnitt in der Achse 5 mündet. Letzterer verläuft in Richtung der Längsmittelachse durch die Achse 5 bis in eine axiale Stirnfläche der Achse.

Nachdem bevorzugt der Zwischenraum 7 über den gesamten Umfang der Achse verlaufend ausgebildet ist, sind bevorzugt auch mehrere radiale Abschnitte der Verbindungsleitung 16 ausgebildet, beispielsweise zwei wie in Fig. 1 dargestellt, oder drei oder vier, etc.

Es besteht dabei die Möglichkeit, dass der axiale Abschnitt der Verbindungsleitung 16 im Bereich der Längsmittelachse der Achse 5 verläuft, sodass diese also zumindest teilweise als Hohlachse ausgebildet ist.

Nach einer Ausführungsvariante dazu kann die Achse 5 zur Gänze als Hohlachse ausgebildet sein, sodass also der axiale Abschnitt der Verbindungsleitung 16 bis in beide Stirnflächen - in axialer Richtung betrachtet - der Achse 5 reicht.

Zusätzlich dazu kann zumindest eine Verbindungsleitung 16 auch in dem Zahnrad 2 ausgebildet sein, wie dies in Fig. 1 strichliert dargestellt ist.

Es ist im Rahmen der Erfindung auch möglich, dass in axialer Richtung unterhalb des Zwischenraums 7 mehrere radialer Abschnitte der Verbindungsleitung 16 nebeneinander angeordnet sind.

Der Durchmesser der radialen Abschnitte der Verbindungsleitung 16 unmittelbar unterhalb der Lagerstellen weist vorzugsweise eine Größe auf, die ausgewählt ist aus einem Bereich von 5 mm bis 30 mm, insbesondere aus einem Bereich von 10 mm bis 20 mm. Vorzugsweise ist die Größe des Gesamtquerschnittes der Verbindungsleitungen 16 so groß wie der Gesamtquerschnitt der Ölzufuhrleitungen.

Weiter kann der Querschnitt der Verbindungsleitung 16 rund, oval, rechteckförmig, quadratisch, polygonal, etc. ausgeführt sein.

Für die Abfuhr des Schmiermittels aus den Lagerbereichen können eigene Abfuhrleitungen (nicht dargestellt) vorgesehen sein. Zumindest ein Teil des Schmiermittels kann aber auch über die Verbindungsleitung in der Achse 5 abgeführt werden.

Es ist weiter bevorzugt, wenn ein Verhältnis der Breite der Lagerstelle in axialer Richtung zum Durchmesser der Achse 5 in radialer Richtung maximal 2 beträgt beträgt. Insbesondere kann dieses Verhältnis ausgewählt sein aus einem Bereich von 1 bis 2, vorzugsweise aus einem Bereich von 0,3 bis 0,8.

Zudem ist vorzugsweise eine Breite 17 des Zwischenraums 7 in axialer Richtung ausgewählt ist aus einem Bereich von 5 % bis 90 %, insbesondere aus einem Bereich von 10 % bis 50%, der Breite eines Gleitlagers 4 in axialer Richtung.

Weiter ist vorzugsweise eine Höhe 18 des Zwischenraums 7 in radialer Richtung ausgewählt ist aus einem Bereich von 5 % bis 100 %, insbesondere aus einem Bereich von 10% bis 70 %, der Wandstärke des Gleitlagers 4.

Sämtliche Abmessungen sind bezüglich der Verhältnisangaben in mm.

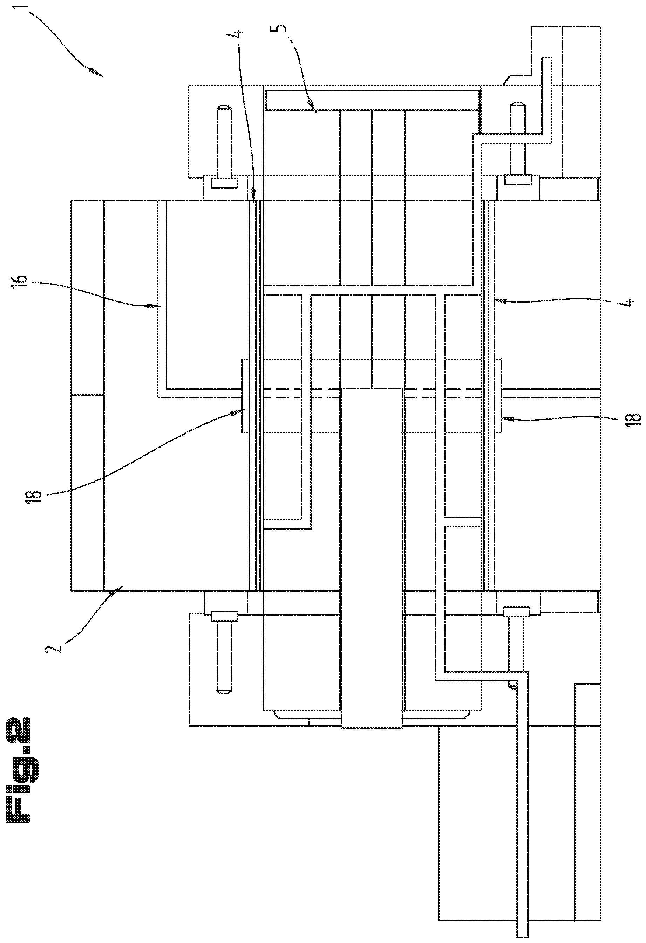

Es besteht im Rahmen der Erfindung auch die Möglichkeit, dass die beiden bzw. mehreren Gleitlager 4 zu einem Gleitlager 4 zusammengefasst sind, also insbesondere nur ein Gleitlager 4 in Form einer Gleitlagerbuchse angeordnet ist, wie diese in Fig. 2 dargestellt ist.

In diesem Fall kann der in Fig. 1 dargestellte Zwischenraum 7 durch zumindest eine Nut 18 in der Anlagefläche des Zahnrades 2 gebildet sein. Die zumindest eine Nut 18 verläuft in Umfangsrichtung im Zahnradkörper des Zahnrades 2.

Darüber hinaus entspricht diese Ausführungsvariante des Windkraftanlagengetriebes 1 bevorzugt jener nach Fig. 1. Es ist also auch bei dieser Ausführungsvariante die Nut 18 über zumindest eine Verbindungsleitung 16 mit der Umgebungsatmosphäre verbunden. Die zumindest eine Verbindungleitung 16 kann durch das Zahnrad 2 oder - wie dies in Fig. 2 strichliert dargestellt ist - durch das Gleitlager 4 und die Achse 5 geführt sein, wobei auch beide Varianten in einer Ausführung des Windkraftanalgengetriebes 1 möglich sind..

Der Ordnung halber sei abschließend darauf hingewiesen, dass zum besseren Verständnis des Aufbaus Windkraftanlagengetriebes 1 dieses bzw. dessen Bestandteile teilweise unmaßstäblich und/oder vergrößert und/oder verkleinert dargestellt wurden.

### Bezugszeichenaufstellung

- 1: Windkraftanlagengetriebe
- 2: Zahnrad
- 3: Außenstirnverzahnung
- 4: Gleitlager
- 5: Achse

- 6: Zahnradträger
- 7: Zwischenraum
- 8: Anlaufscheibe
- 9: Ringnut
- 10: Ringsteg

- 11: Bohrung
- 12: Schmiermitteleinlass
- 13: Bereich
- 14: Schmiermittelaustritt
- 15: Schmiermitteleinlass

- 16: Verbindungsleitung
- 17: Breite
- 18: Nut

## Patentansprüche

1. Windkraftanlagengetriebe (1) mit zumindest einem Zahnrad (2), das auf einer Achse (5) gelagert ist, wobei zwischen dem Zahnrad (2) und der Achse (5) eine Lagerstelle mit einem Gleitlager (4) angeordnet ist, und wobei in der Achse (5) eine Ausnehmung zur Zuführung eines Schmiermittels zu dem Gleitlager (4) ausgebildet ist, **dadurch gekennzeichnet, dass** im Bereich einer Anlagefläche des Gleitlagers (4) an dem Zahnrad (2) eine Nut (18) im Zahnrad ausgebildet ist und die Nut (18) über zumindest eine Verbindungsleitung (16) mit der Umgebungsatmosphäre verbunden ist, wobei die Verbindungsleitung (16) in der Achse (5) ausgebildet ist.

2. Windkraftanlagengetriebe (1) mit zumindest einem Zahnrad (2), das auf einer Achse (5) gelagert ist, wobei zwischen dem Zahnrad (2) und der Achse (5) eine Lagerstelle mit Gleitlagern (4) angeordnet ist, die in axialer Richtung unter Ausbildung eines Zwischenraums (7) voneinander beabstandet sind, und wobei in der Achse (5) eine Ausnehmung zur Zuführung eines Schmiermittels zu den Gleitlagern (4) ausgebildet ist, **dadurch gekennzeichnet, dass** der Zwischenraum (7) über zumindest eine Verbindungsleitung (16) mit der Umgebungsatmosphäre verbunden ist, wobei die Verbindungsleitung (16) in der Achse (5) ausgebildet ist.

3. Windkraftanlagengetriebe (1) nach Anspruch 1 oder 2, **dadurch gekennzeichnet, dass** die Nut (18) oder der Zwischentraum (7) über eine zusätzliche Verbindungsleitung (16) mit der Umgebungsatmosphäre verbunden ist, wobei diese zusätzliche Verbindungsleitung (16) im Zahnrad (2) ausgebildet ist.

4. Windkraftanlagengetriebe (1) nach einem der Ansprüche 1 bis 3, **dadurch gekennzeichnet, dass** die Achse (5) zumindest teilweise als Hohlachse ausgeführt ist.

5. Windkraftanlagengetriebe (1) nach einem der Ansprüche 1 bis 4, **dadurch gekennzeichnet, dass** im Bereich jedes Gleitlagers (4) zumindest eine Ausnehmung zur Zuführung des Schmiermittels angeordnet ist.

6. Windkraftanlagengetriebe (1) nach einem der Ansprüche 3 bis 5, **dadurch gekennzeichnet, dass** über die Verbindungsleitung (16) in der Achse (5) zumindest ein Teil des Schmiermittels aus dem Gleitlagerbereich abführbar ist.

7. Windkraftanlagengetriebe (1) nach einem der Ansprüche 1 bis 6, **dadurch gekennzeichnet, dass** ein Verhältnis der Breite der Lagerstelle in axialer Richtung zum Durchmesser der Achse (5) in radialer Richtung maximal 2 beträgt.

8. Windkraftanlagengetriebe (1) nach einem der Ansprüche 1 bis 7, **dadurch gekennzeichnet, dass** eine Breite (17) des Zwischenraums (7) oder der Nut (18) in axialer Richtung ausgewählt ist aus einem Bereich von 5 % bis 90 % der Breite eines Gleitlagers (4) in axialer Richtung.

9. Windkraftanlagengetriebe (1) nach einem der Ansprüche 1 bis 8, **dadurch gekennzeichnet, dass** eine Höhe (18) des Zwischenraums (7) oder der Nut (18) in radialer Richtung ausgewählt ist aus einem Bereich von 5 % bis 100 % der Wandstärke des Gleitlagers (4).

## Claims

1. A wind turbine gearbox (1) having at least one gearwheel (2), which is mounted on an axle (5), wherein a bearing point with a plain bearing (4) is arranged between the gearwheel (2) and the axle (5), and wherein in the axle (5) a recess is formed for supplying a lubricant to the plain bearing (4), **characterized in that** in the region of a bearing surface of the plain bearing (4) on the gearwheel (2) a groove (18) is formed in the gearwheel and the groove (18) is connected via at least one connecting line (16) to the surrounding atmosphere, wherein the connecting line (16) is formed in the axle (5).

2. A wind turbine gearbox (1) having at least one gearwheel (2), which is mounted on an axle (5), wherein a bearing point with plain bearings (4) is arranged between the gearwheel (2) and the axle (5), which plain bearings are spaced apart from one another in axial direction forming an intermediate space (7), and wherein in the axle (5) a recess is formed for supplying a lubricant to the plain bearings (4), **characterized in that** the intermediate space (7) is connected to the surrounding atmosphere by means of at least one connecting line (16), wherein the connecting line (16) is formed in the axle (5).

3. The wind turbine gearbox (1) according to claim 1 or 2, **characterized in that** the groove (18) or the intermediate space (7) is connected to the surrounding atmosphere via an additional connecting line (16), wherein this additional connecting line (16) is formed in the gearwheel (2).

4. The wind turbine gearbox (1) according to one of claims 1 to 3, **characterized in that** the axle (5) is designed at least partly as a hollow axle.

5. The wind turbine gearbox (1) according to one of claims 1 to 4, **characterized in that** in the region of each plain bearing (4) at least one recess is arranged for supplying the lubricant.

6. The wind turbine gearbox (1) according to one of claims 3 to 5, **characterized in that** at least a portion of the lubricant can be removed from the plain bearing area via the connecting line (16) in the axle (5).

7. The wind turbine gearbox (1) according to one of claims 1 to 6, **characterized in that** a ratio of the width of the bearing point in axial direction to the diameter of the axle (5) in radial direction is a maximum of 2.

8. The wind turbine gearbox (1) according to one of claims 1 to 7, **characterized in that** a width (17) of the intermediate space (7) or the groove (18) in axial direction is selected from a range of 5% to 90% of the width of a plain bearing (4) in axial direction.

9. The wind turbine gearbox (1) according to one of claims 1 to 8, **characterized in that** a height (18) of the intermediate space (7) or the groove (18) in radial direction is selected from a range of 5% to 100% of the wall thickness of the plain bearing (4).

## Revendications

1. Transmission d'éolienne (1) avec au moins une roue dentée (2) qui est logée sur un axe (5), moyennant quoi, entre la roue dentée (2) et l'axe (5), est disposé un point d'appui avec un palier lisse (4), et moyennant quoi, dans l'axe (5), est réalisé un évidement pour l'introduction d'un lubrifiant dans le palier lisse (4), **caractérisée en ce que**, au niveau d'une surface d'appui du palier lisse (4) sur la roue dentée (2), une rainure (18) est réalisée dans la roue dentée et la rainure (18) est reliée par l'intermédiaire d'au moins une conduite de liaison (16) avec l'atmosphère ambiante, la conduite de liaison (16) étant réalisée dans l'axe (5).

2. Transmission d'éolienne (1) avec au moins une roue dentée (2) qui est logée sur un axe (5), moyennant quoi, entre la roue dentée (2) et l'axe (5), est disposé un point d'appui avec des paliers lisses (4), qui sont écartés les uns des autres dans la direction axiale en formant un espace intermédiaire (7) et moyennant quoi, dans l'axe (5), est réalisé un évidement pour l'introduction d'un lubrifiant dans les paliers lisses (4), **caractérisée en ce que** l'espace intermédiaire (7) est relié par l'intermédiaire d'au moins une conduite de liaison (16) avec l'atmosphère ambiante, la conduite de liaison (16) étant réalisée dans l'axe (5).

3. Transmission d'éolienne (1) selon la revendication 1 ou 2, **caractérisée en ce que** la rainure (18) ou l'espace intermédiaire (7) est relié par l'intermédiaire d'une conduite de liaison (16) supplémentaire avec l'atmosphère ambiante, cette conduite de liaison (16) supplémentaire étant réalisée dans la roue dentée (2).

4. Transmission d'éolienne (1) selon l'une des revendications 1 à 3, **caractérisée en ce que** l'axe (5) est réalisé au moins partiellement sous la forme d'un axe creux.

5. Transmission d'éolienne (1) selon l'une des revendications 1 à 4, **caractérisée en ce que**, au niveau de chaque palier lisse (4), est disposé au moins un évidement pour l'introduction du lubrifiant.

6. Transmission d'éolienne (1) selon l'une des revendications 3 à 5, **caractérisée en ce que**, par l'intermédiaire de la conduite de liaison (16) dans l'axe (5), au moins une partie du lubrifiant peut être évacuée hors de la zone de palier lisse.

7. Transmission d'éolienne (1) selon l'une des revendications 1 à 6, **caractérisée en ce qu'**un rapport entre la largeur du point d'appui dans la direction axiale et le diamètre de l'axe (5) dans la direction radiale est de 2 maximum.

8. Transmission d'éolienne (1) selon l'une des revendications 1 à 7, **caractérisée en ce qu'**une largeur (17) de l'espace intermédiaire (7) ou de la rainure (18) dans la direction axiale est sélectionnée dans un intervalle de 5 % à 90 % de la largeur d'un palier lisse (4) dans la direction axiale.

9. Transmission d'éolienne (1) selon l'une des revendications 1 à 8, **caractérisée en ce qu'**une hauteur (18) de l'espace intermédiaire (7) ou de la rainure (18) dans la direction radiale est sélectionnée dans un intervalle de 5 % à 100 % de l'épaisseur de paroi du palier lisse (4).
